Europäisches Patentamt

European Patent Office

Office européen des brevets

(19)

(11) Publication number : **0 199 728**
**B1**

# EUROPEAN PATENT SPECIFICATION

(12)

(45) Date of publication of patent specification :
11.01.89

(51) Int. Cl.⁴ : **C 04 B 18/26, C 04 B 16/02**

(21) Application number : **85900672.8**

(22) Date of filing : **09.01.85**

(86) International application number :
**PCT/FI 85/00005**

(87) International publication number :
**WO/8503069 (18.07.85 Gazette 85/16)**

(54) ADJUSTMENT METHOD FOR THE PROPERTIES OF CONCRETE.

(30) Priority : **13.01.84 FI 840120**

(43) Date of publication of application :
**05.11.86 Bulletin 86/45**

(45) Publication of the grant of the patent :
**11.01.89 Bulletin 89/02**

(84) Designated contracting states :
**BE DE FR GB NL SE**

(56) References cited :
**CH–B– 535 726**
**DE–A– 3 007 012**
**DE–C– 915 317**
**GB–A– 102 522**
**GB–A– 1 406 442**
**SE–C– 120 150**
**SE–C– 133 153**
**SE–C– 139 851**
**US–A– 1 537 406**
**US–A– 2 909 439**
**US–A– 3 753 749**
**The file contains technical information submitted after the application was filed and not included in this specification**

(73) Proprietor : **VALTION TEKNILLINEN TUTKI-MUSKESKUS**
**Vuorimiehentie 5**
**SF-02150 Espoo 15 (FI)**

(72) Inventor : **SARJA, Asko**
**Betonimiehenkuja 5**
**SF-02150 Espoo (FI)**

(74) Representative : **Siebmanns, Hubertus**
**Götalands Patentbyra AB Box 154**
**S-561 22 Huskvarna (SE)**

## Description

The objective of the invention is a method for transformation of properties of concrete, performed by means of, using as components of the concrete in variable proportions hydraulic binder, to their length in continuous grading or gap-grading distributed wood fibres and aggregate having a particle size between 0,1 and 8 mm, and transforming the properties of the concrete by varying the proportions of component parts in such way, that the dry weight proportions of the different component part materials in concrete comprise by weight 2-40 % wood fibres, 20-50 % binder, 10-50 % aggregate and 15-40 % water.

Out of the concrete several light and hardened easily workable (sawing, nailing, planing) qualities have been developed, such as aerated concrete, expanded clay aggregate concrete, foamed concrete and 3L-concrete. Typical for all these is, however, in common that they are in their way of fracturing rather brittle, especially as far tensile failure is concerned.

On the other hand, the toughness and the tensile strength of the concrete has been improved by adding fibres to it. Such fibres have been e. g. steel, glass and sisal fibres. The quantity of fibres is in general 0.5-2 % by volume and the length 20-30 mm. Also wood cellulose fibres have been used. The length of the cellulose fibres is 2-5 mm.

Such fibre reinforcement as well as the combined use of rigid (e. g. steel fibres) and elastic fibres (e. g. natural and artificial fibres) has been suggested in the GB 1406442. From DE-A 3007012 it is known to use the cement and two-component wood fibre. In that method a larger quantity (77-85 % by weight) of cement is used. From CH 287 805 it is known to use wood fibres of various lengths. In these methods the water, cement and wood fibres are mixed into a gruel-like compound, which is then pressed until it is dry. A similar method of production is in use also for asbestoscement products and the cellulose fibres in cement products.

All the methods hitherto have had a great many of disadvantages, wherefore an extensive use of them in the building and other industries has not been possible. The worst disadvantage has been the fact, that the workability properties of the concrete have not been improved well enough. Many of these prior art methods require also expensive raw materials, in particular a great amount of cement, as in the case in the method described in De-A 3007012. In those methods, where only short fibres are used, sufficient toughness or workability properties have not been achieved in the concrete. The admixtures used have often other disadvantages as well ; the glass fibres have corroded in the concrete, abating the properties of the concrete in a short time. In such cases, when dense concrete is wanted, such as roofings slabs, another problem is the porosity caused by water.

An object of this invention is to get the concrete to be of good workability and to be as tough as possible at same time and to optimize several other properties, such as e. g. the unit weight and thermal insulation capacity. The object of the invention has been attained with the method, of which are characteristic the matters appearing from the claims.

According to the method of the invention all the water needed for the hardening reactions of the binder is brought into the concrete mass absorbed in the wood fibres by means of soaking the wood fibres prior the mixing of the mass in water or in water solution containing substances suitable for the pretreatment of the wood fibres. The fibres are by weight 10-100 % short wood fibres having a length between 1 mm and 5 mm, 0-30 % medium wood fibres having a length between 5 mm and 15 mm and 0-90 % long wood fibres having a length over 15 mm. The basic idea of the invention is to improve the concrete over ordinary concrete with the help of fibres by using only a small quantity of hydraulic binder with the main part of the volume of the material being wood fibres and aggregate. The binder of the concrete can be utilized with optimal efficiency by bringing all the water required for the hydration into the mass absorbed in the fibres, whereby it is discharged from the fibres slowly and does not form in the compaction phase detrimental capillary pores in the cement stone. The consistency of the compound has at the same time been made well adaptable to the combined compression-vibration compaction, which makes a simple and economical production possible.

The concrete in accordance with the invention, which has good toughness properties at the same time as the workability is also good, and the unit weight, the thermal insulation capacity, the porosity and the acoustic absorptivity of which are within certain limits as they are desired, is achieved by using fibre reinforcement of different measurement classes together with a hydraulic binder and the aggregate. Characteristic to the fibre reinforcement in accordance with the invention is, that in the method fibres of different measurement classes are used mixed together with each other. The length distribution of the fibres may vary and be of continuous grading or within some certain intervening space of gap-grading. Short fibres are used to give the cured cement adhesive workability and toughness, as well as in case of need long fibres to bind together parts of the cement adhesive over the aggregate particles, cracks and short fibres, whereby the concrete is made tough even when the aggregate particles are broken or disjoined in the fracture situation. The other properties, such as the unit weight, the thermal insulation capacity, the porosity and the acoustic absorptivity can be varied by changing the proportions of short and long fibres as well as that of the aggregate. The fibres can most suitably be wood fibres, but also other natural and artificial fibres possessing approximately the mechanical and moisture technical properties of the wood fibres can be used.

Normally two types of cracks occur in the concrete, which deteriorate the toughness of the concrete particularly under tensile stress. In the cement stone occur small microcracks and in the cement under extension strain macrocracks set on. In the two-component fibre reinforcement short fibres are used to transfer the tensions over the macrocracks. In this manner the toughness properties of the concrete can be increased in a desired way.

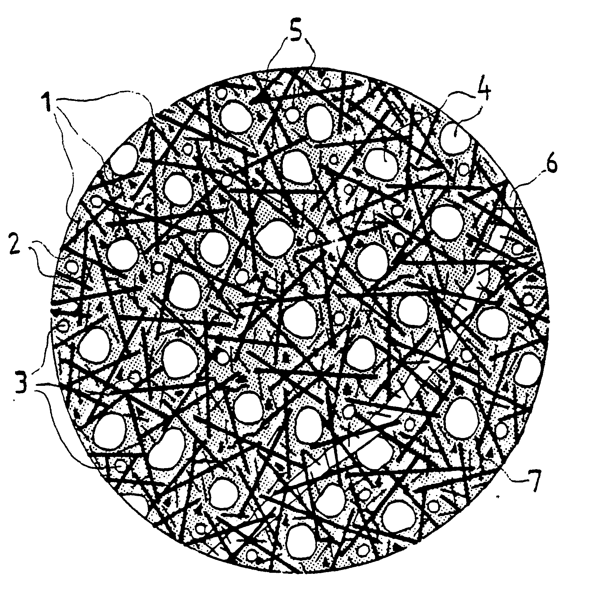

The method in accordance with the invention has been illustrated in the figure, which shows a principal figure of the co-operative functions of the short and the long fibres. In the figure there has been described short wood fibre 1, long wood fibre 2, small aggregate particles 3, large aggregate particles 4, cement adhesive 5, macrocrack 6 and microcracks 7. Generally it is suited to used such a quantity of short fibres as is required in order to achieve a good workability of the fresh concrete mass and the hardened concrete.

In such cases where the main goal is to get a dense and tough concrete, only short, water imbided fibre is used. By varying the total quantity of fibres as well as the proportions of the short and long fibres the properties of the hardened concrete can be adjusted in the desired way. By increasing the quantity of the short fibres the variable properties of the concrete can be improved up to a certain degree. The workability of the concrete mass in fresh form gives, however, a limit to the quantity of the short fibres, whereafter the variation of the properties of the concrete takes place by increasing the quantity of the long fibres. The increased quantity of fibres improves on the toughness of the concrete, on the thermal insulation capacity, on the workability in hardened form, adds to the porosity and improves the acoustic absorption. These properties play an important role in several constructions of the workshop and residential buildings. When a dense but still to a certain degree tough and in hardened form workable concrete is wanted, only short fibres are applied.

When using wood fibres or other natural fibres of different measurement classes mixed together with each other even very large quantities of fibres can easily and economically be mixed into the concrete, up to several tens of per cent by volume. Hereby the properties of the concrete can be varied favourably approximately within the following limits :

— Workability of the hardened concrete with saw, ax, knife nad ordinary nails from processable up to the hardness of the ordinary concrete.

— Tensile strength generally between 1 ... 5 MN/m².

— The ratio between the tensile and compressive strength generally between 0.25 ... 1.0 the ratio being for ordinary concrete about 0.10.

— The density approximately between 800 ... 2 000 kg/m³.

— The toughness measured as deformation work approximately 5 ... 50 times bigger compared with concrete possessing the same compressive strength.

— The compressive strength approximately between 1 MM/m² ... 20 MN/m².

— The modulus of elasticity between 5 000 ... 20 000 MN/m².

— The thermal insulation capacity between 0.10 ... 0.80 W/m °C.

— The permeability of aqueous vapour between (10 ... 50). $10^{-1}$ kg/msPa.

In surveys it has been proved, that the cement adhesive gives the wood fibres a rather good protection against rot. The wood fibrous concrete has also depending on the quantity of the wood fibres a fire resistance of different degree and it is a non-flammable material.

The material is made economical by using only fairly little, about 15 ... 40 per cent by the volume, of the binder, which is more expensive than the other components, and in addition to that always aggregate, whereby the joining together of the wood fibres is taking place with the help of the cast stone formed together by the hydraulic binder and the aggregate. As aggregate can be used either to its particle size mainly between 0.1 ... 8 mm being natural aggregate or to its particle size within the same range being other aggregate, such as pulverized fuel ash, expanded clay aggregate or perlite. The binder can be either Portland cement or other hydraulic binder, such as blast-furnace cement, pulverized fuel ash or natural pozzuolana.

The wood fibrous concrete can not due to the elasticity of the wood fibres be compacted efficiently by vibration alone, as in the case in common, when it is the question of ordinary concrete. When making other fibrous products, such as asbestoscement products usually a compression or a combined compression and vibration compaction is applied. The mass of the asbestoscement products and e. g. that of the German patent DE 3007012 regarding wood fibrous cement is produced by mixing a large quantity of water, the fibres and the cement into a watery sludge, which is collected on a belt and compressed dry and compact. This production method is fairly complicated and expensive and it succeeds only then, when plenty of cement is used and the product to be made is a thin sheetlike product.

In order to achieve a sufficient strength and a small shrinkage to the concrete it is worthwhile to make the water-cement ratio small. In particular the demand for a small water-cement ratio is accentuated in the otherwise for the fibrous concrete mass very well suited, with the compression-vibration method performed compaction, where the water content of the mass is very detrimental.

The water in the concrete mass causes capillary pores in the mass, which deteriorate the strength and density of the cement stone created in the hydration. When the fibrous concrete is concerned, the water included in the fresh mass makes also the adhesion between the cement stone and the fibres weaker. In the compression-vibration compaction the water trends towards the surface, whereby the formation of the capillary pores is still increased. A product manufactured with the compression-vibration is made coherent right after the compaction, if the water-cement ratio is small enough.

Differently from the situation in the fibrous cement products described above, in the fibrous concrete in accordance with this invention no soft watery compound is formed but a very dry mass. This takes place in such a way, that the fibres are soaked for sufficiently long period of the time, e. g. for 24 hours prior the mixing of the concrete, in water or in a water solution containing substances suitable for a pretreatment of the fibres, whereby water is absorbed into the fibres. When fibres are used in sufficient quantities, the amount of water absorbed in the fibres is enough for hydration of the cement quantity used, wherefore no water is added to the mass in the making process. When using big quantities of fibres, the amount of water contained in the fibres may be unnecessarily and to a certain degree even detrimentally large, whereby the fibres can partly be dried mechanically through pressing or through evaporation of a suitable part of the water before the mixing of the mass. The water required for the hydration of the binder is particularly favourable to be transferred to the concrete mass absorbed in the fibres for the very reason, that the water is detached for the use of the binder to be hydrated slowly in the proceeding of the hydration, whereby the cement stone produced develops to be favourably dense and strong. At the same time the bonding between the cement stone and the fibres becomes optimally good. A small part of the water is generally transferred into the concrete mass in form of the moisture contained in the dry aggregate. The in this way produced fibrous concrete mass is suitable to be compacted with the help of the combined compression and vibration method. The manufactured product is well coherent right after the compaction, wherefore it can be removed in connection with the continued processing.

In the method according to the invention it is advantageous when the dry weight proportions of the different component part materials in the concrete vary between the following intervals : wood fibres 2 per cent ... 40 per cent, binder 20 per cent ... 50 per cent, aggregate 10 per cent ... 50 per cent and the water content in the fibres and the aggregate 15 per cent ... 40 per cent. Furthermore in the concrete can be used desired admixtures, such as e. g. accelerators, air-entraining agents and plasticizers. The dry weight proportions of the length distribution in the fibres can vary within the following limits of the total quantity of the fibres : short wood fibres (length 1 ... 5 mm) 10 per cent ... 100 per cent, medium long fibres (length 5 ... 15 mm) 0 per cent ... 30 per cent and long fibres (lengths exceeding 15 mm) 0 per cent ... 90 per cent.

Suitable objects of use for wood fibrous concrete are for instance :
— bearing and non-bearing walls and plates of small houses, which can easily be machined in prefabrication plants for parts and on working site
— constructions of agricultural production building
— constructions of small industrial buildings
— in export objects small, of low cost housing-type, easily assembled residential buildings, which are not-rotting nor inflammable and resistant against termites and other organisms
— roofing slabs and
— partition walls in apartment houses.

The decisive benefit of the fibrous concrete in accordance with this invention is its economical and technical advantageousness in regions, where available is cement, fairly fine-grained natural aggregate or e. g. expanded clay aggregate and wood fibres. It is worth while to transport cement and wood fibres even fairly long distances due to their small part by the volume. Thanks to its toughness such wood fibrous concrete is favourable to use as relatively thin, but generally thicker than common sheating-plate sheetlike products. The material is very suitable for as well bearing as partitive constructions. An advantage of it compared with ordinary concrete and with the most of the fibrous cement products is also the possibility to get the density fairly low.

Due to the sugar contained in the wood fibres a suitable chemical pretreatment, e. g. a soaking in NaOH or Ca(OH)$_2$-solution, is required in order to prevent a prolongation of setting time of the cement. When using bleached cellulose fibres the elimination treatment of sugar is superfluous for its parts. Due the elasticity of the wood fibres and in order to improve the adhesion of the fibres the compression-vibration method is the most favourable mode of compaction.

In the preceding explanatory part the main forms of application of the invention have been exposed. The adjustment method for the properties of the concrete in accordance with the invention can to its form of application vary even extensively within the frames of the claims.

**Claims**

1. A method for transformation of properties of concrete, performed by means of, using as components of the concrete in variable proportions hydraulic binder, to their length in continuous grading or gap-grading distributed wood fibres and aggregate having a particle size between 0,1 and 8 mm, and transforming the properties of the concrete by varying the proportions of component parts in such way, that the dry weight proportions of the different component part materials in concrete comprise by weight 2-40 % wood fibres, 20-50 % binder, 10-50 % aggregate and 15-40 % water, characterized in that all the water needed for the hardening reactions of the binder is brought into the concrete mass absorbed in the wood fibres by means of soaking the wood fibres prior the mixing of the mass in water or in a water solution containing substances suitable for the pretreatment of the wood fibres, and fibres are, by weight 10-100 % short wood fibres having a length between 1 mm and 5 mm, 0-30 % medium wood fibres having a length between 5 mm and 15 mm and 0-90 % long wood fibres having a length over 15 mm.

2. A method according to claim 1, characterized in that accelerators, air entraining agents and/or plasticizers are added to mixture of binder and aggregate.

3. A method according to any one of the claims 1-2, characterized in that the aggregate material is selected from the group consisting of natural aggregate, artificial aggregate, pulverized fule ash, expanded clay aggregate and perlite.

4. A method according to any one of the claims 1-3, characterized in that the concrete is compacted by means of compression or by means of a combined compression and vibration.

**Patentansprüche**

1. Verfahren zum Umwandeln der Eigenschaften von Beton, ausgeführt mittels und unter Anwendung eines hydraulischen Bindemittels als Bestandteil des Betons in veränderlichen Anteilen, in ihrer Länge in kontinuierlicher oder diskontinuierlicher Gradierung verteilten Holzfasern oder -masse mit einer Partikelgrösse zwischen 0,1 und 8 mm, wobei das Umwandeln der Eigenschaften des Betons durch Verändern der Anteile der Komponententeile geschieht derart, dass das Trockengewicht der Anteile der verschiedenen Komponententeilmateriale im Beton 2-40 Gewichtsprozent Holzfasern, 20-50 Gewichtsprozent Bindemittel, 10-50 Gewichtsprozent Masse und 15-40 Gewichtsprozent Wasser ausmacht, dadurch gekennzeichnet, dass all das für die Härtungsreaktion des Bindemittels erforderliche Wasser absorbiert in den Holzfasern in die Betonmasse gebracht wird, indem die Holzfasern vor dem Einmischen in die Masse in Wasser oder eine Wasserlösung getränkt werden, welche Substanzen enthält, welche für eine Vorbehandlung der Holzfasern geeignet sind, und dass die Fasern in Gewichtsprozent ausmachen 10-100 % kurze Holzfasern mit einer Länge zwischen 1 und 5 mm, 0-30 % mittlere Holzfasern mit einer Länge zwischen 5 und 15 mm sowie 0-90 % lange Holzfasern mit einer Länge über 15 mm.

2. Verfahren nach Anspruch 1, dadurch gekennzeichnet, dass Beschleuniger, Lufteinschliessmittel und/oder Plastizierer der Mischung von Bindemittel und Masse zugesetzt werden.

3. Verfahren nach einem der Ansprüche 1-2, dadurch gekennzeichnet, dass das Massenmaterial ausgesucht wird von einer Gruppe bestehend aus Naturmasse, Kunstmasse, pulverisierter Brennstoffasche, expandierter Tonmasse und Perlit.

4. Verfahren nach einem der Ansprüche 1-3, dadurch gekennzeichnet, dass der Beton verdichtet wird durch Komprimierung oder kombiniertes Komprimieren und Vibrieren.

**Revendications**

1. Procédé de transformation des propriétés du béton, consistant à utiliser, en tant que composants du béton et en proportions variables, un liant hydraulique, des fibres de bois à distribution en longueurs répartie de façon continue ou répartie avec des lacunes, et un agrégat ayant une granulométrie comprise entre 0,1 et 8 mm, et à transformer les propriétés du béton en faisant varier les proportions des parties composantes de façon telle que les proportions en poids à sec des différentes matières constituant les parties composantes présentes dans le béton comprennent, en poids, de 2 à 40 % de fibres de bois, de 20 à 50 % de liant, de 10 à 50 % d'agrégat et de 15 à 40 % d'eau, caractérisé en ce que toute l'eau nécessaire pour les réactions de durcissement du liant est amenée dans la masse de béton à l'état absorbé dans les fibres de bois, en immergeant les fibres de bois, avant de mélanger la masse, dans de l'eau ou dans une solution aqueuse contenant des substances convenant pour le prétraitement des fibres de bois, et en ce que les fibres consistent, en poids, en 10 à 100 % de fibres de bois courtes ayant une longueur comprise entre 1 mm et 5 mm, 0 à 30 % de fibres de bois moyennes ayant une longueur comprise entre 5 mm et 15 mm et 0 à 90 % de fibres de bois longues ayant une longueur supérieure à 15 mm.

2. Procédé suivant la revendication 1, caractérisé en ce qu'on ajoute des accélérateurs, des entraîneurs d'air et/ou des plastifiants au mélange de liant et d'agrégat.

3. Procédé suivant l'une quelconque des revendications 1 et 2, caractérisé en ce qu'on choisit la matière de l'agrégat dans le groupe constitué d'un agrégat naturel, d'un agrégat synthétique, de cendres de combustibles en poudre, d'un agrégat formé d'argile expansive, et de perlite.

4. Procédé suivant l'une quelconque des revendications 1 à 3, caractérisé en ce qu'on tasse le béton par compression ou par compression et vibration combinées.